Europäisches Patentamt

European Patent Office

Office européen des brevets

(19)

(11) Veröffentlichungsnummer : **0 307 421 B1**

# (12) EUROPÄISCHE PATENTSCHRIFT

(45) Veröffentlichungstag der Patentschrift :
26.08.92 Patentblatt 92/35

(51) Int. Cl.$^5$ : **G02B 7/16**

(21) Anmeldenummer : 88901561.6

(22) Anmeldetag : 18.02.88

(86) Internationale Anmeldenummer :
PCT/DE88/00080

(87) Internationale Veröffentlichungsnummer :
WO 88/07217 22.09.88 Gazette 88/21

(54) REVOLVER-DREHEINRICHTUNG FÜR OPTISCHE BAUELEMENTE SOWIE VERFAHREN ZUR REGELUNG DER DREHZAHL DERSELBEN.

(30) Priorität : 09.03.87 DE 3707593
08.04.87 DE 3711843

(43) Veröffentlichungstag der Anmeldung :
22.03.89 Patentblatt 89/12

(45) Bekanntmachung des Hinweises auf die
Patenterteilung :
26.08.92 Patentblatt 92/35

(84) Benannte Vertragsstaaten :
AT DE FR GB

(56) Entgegenhaltungen :
DE-A- 1 547 374
DE-A- 3 240 401

(56) Entgegenhaltungen :
Paten Abstracts of Japan, vol. 9, No. 167
(P-372)(1890), 12 July 1985, & JP A 6045214
Patent Abstracts of Japan, vol. 9, no. 273
(P-401)(1996), 30 October 1985, & JPA
60118817

(73) Patentinhaber : Leica Industrieverwaltung
GmbH
Ernst-Leitz-Strasse 30 Postfach 20 20
W-6330 Wetzlar 1 (DE)

(72) Erfinder : GAUL, Norbert
Almenröder Str. 4
W-6336 Solm (DE)
Erfinder : REINHEIMER, Günter
Am Berg 11
W-6301 Biebertal (DE)
Erfinder : WEIMAR, Peter
Hainbachstr. 21
W-6301 Staufenberg 4 (DE)

EP 0 307 421 B1

## Beschreibung

Die Erfindung betrifft eine Revolver-Dreheinrichtung mit einer Anzahl optischer Bauelemente für optische Geräte, insbesondere Mikroskope, wobei die optischen Bauelemente jeweils einzeln in Wirkstellug bringbar sind. Unter optischen Bauelementen werden im vorliegenden Fall vor allem Objektive, Kondensoren, Filter, Blenden oder strahlenumlenkende Bauelemente verstanden.

Durch die zunehmende Automation im mikroskopischen Gerätebau, vgl. beispielsweise Mikro-Analysengeräte oder Spezialmikroskope für die Halbleiter-Industrie, sind beispielsweise bereits motorisch Angetriebene Objektivrevolver bekannt. Dabei wird ein gewünschtes Objektiv mittels eines Signals in Wirkstellung gebracht, welches durch entsprechend angebrachte Lichtschranken (Sensoren) oder Kontakte (Mikroschalter) erzeugt wird. Auch ist es bereits bekannt, an einem motorisch angetriebenen Mikroskoprevolver befestigte Objektive in der Weise zu codieren, daß ein bestimmtes Objektiv nach Wahl in Wirkstellung gebracht werden kann.

So ist aus der DE-OS 32 40 401 beispielsweise eine Dreheinrichtung bekannt, die eine Reihe von Linsen verschiedener Vergrößerungen aufweist. Diese bekannte Einrichtung enthält Codierungen an der Peripherie des Revolvers, weiterhin Lichtschranken und periphere Positionierungs-Einkerbungen sowie mechanische Rastmittel.

In der dem Oberbegriff des Anspruchs 1 entsprechenden JP-Patent-Bekanntmschungsschrift 55-6905 wird darüber hinaus bereits eine Revolveranordnung beschrieben, die eine Anzahl von Farbfiltern auf einer Rotationsplatte trägt. Zusätzlich sind Markierungen in Form von "Rampen" vorgesehen, die mit entsprechenden Mikroschaltern korrespondieren. Die Mikroschalter haben unterschiedliche Radialabstände vom Mittelpunkt der Rotationsplatte.

Aus der US-PS 3 458 706 ist weiterhin eine Vorrichtung bekannt, die eine rotierende Scheibe aufweist, auf deren einer Seite konzentrisch angeordnete Codierungsmittel in unterschiedlichen Radialabständen aufgebracht sind. Optische Mittel an einer der Scheibe gegenüberliegenden Halterung - und zwar Lampen und Fotodioden - wirken mit nicht-reflektierenden bzw. reflektierenden Codierungsmitteln zusammen.

Alle bekannten motorisch umschaltbaren Revolver-Halterungen für optische Bauelemente haben jedoch den Nachteil, daß die Schaltzeit zwischen einem in Wirkstellung befindlichen Revolverauge und einem benachbarten, in Wirkstellung zu bringenden anderen Revolverauge relativ groß ist. Insbesondere bei einem Revolver für Mikroskopobjektive, der mit bis zu sechs und mehr Objektiven ausgerüstet sein muß, wird aufgrund des Masse-Problems die Umschaltzeit von Revolverauge zu Revolverauge dadurch unverhältnismäßig groß, weil die bekannten mechanischen Rastmittel die auftretenden Beschleunigungskräfte nicht mehr Abzufangen vermögen. Es mußte daher bislang bei zunehmender Revolverbestückung mit immer geringerer Revolver-Drehzahl gefahren werden. Dies stellt eine sehr nachteilige Auswirkung dar, die insbesondere bei zeitaufwendigen Routineuntersuchungen evident wird.

Es ist daher die Aufgabe der vorliegenden Erfindung, eine Revolver-Dreheinrichtung bereitzustellen, die trotz einer dichteren Bestückung mit optischen Bauelementen und einer daraus resultierenden Erhöhung von deren Gesamtmasse Positionierungen der jeweils in Wirkstellung zu bringenden optischen Bauelemente in wesentlich kürzeren Umschalt-Intervallen ermöglicht. Eine weitere Teilaufgabe besteht darin, ein Verfahren zur positionsabhängigen Regelung der Drehzahl einer Revolver-Dreheinrichtung anzugeben.

Die Aufgabe wird erfindungsgemäß durch den Patentanspruch 1 bzw. den Patentanspruch 7 gelöst. Weitere Ausgestaltungen ergeben sich aus den Unteransprüchen.

Die Erfindung ist anhand der Zeichnungen näher erläutert. Es zeigen in schematischer Darstellung:

Fig. 1: die Seitenansicht eines kompletten Mikroskops mit einer Antriebseinrichtung für den Objektivrevolver;

Fig. 1a, 1b: eine vergrößerte Detail-Ansicht des Getriebes in Draufsicht (Fig. 1a) und Seitenansicht (Fig. 1b);

Fig. 2: eine vergrößerte Detail-Darstellung des Objektivrevolvers;

Fig. 2a: eine nochmals vergrößerte Detail-Ansicht der Rastmittel sowie des sog. Einfangbereichs;

Fig. 3: eine Draufsicht längs des Schnittes I-I (von Fig. 2) mit zusätzlichen Funktions-Verbindungen zur Steuerelektronik usw.

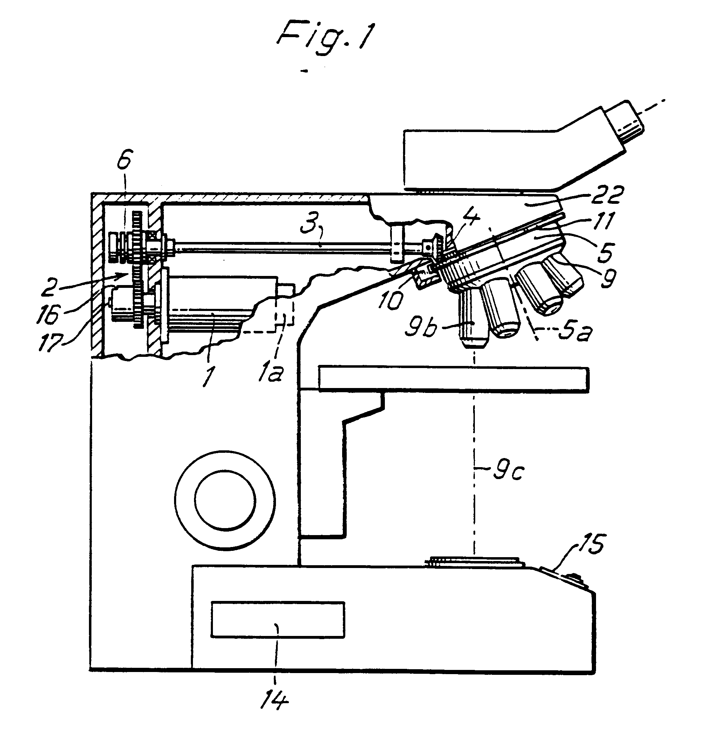

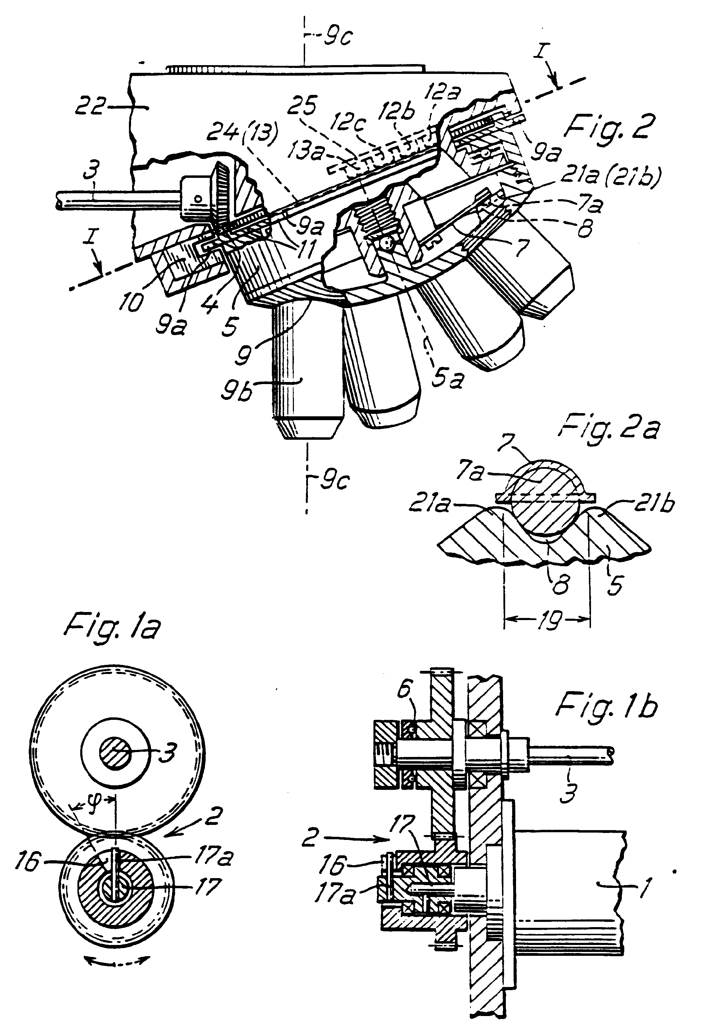

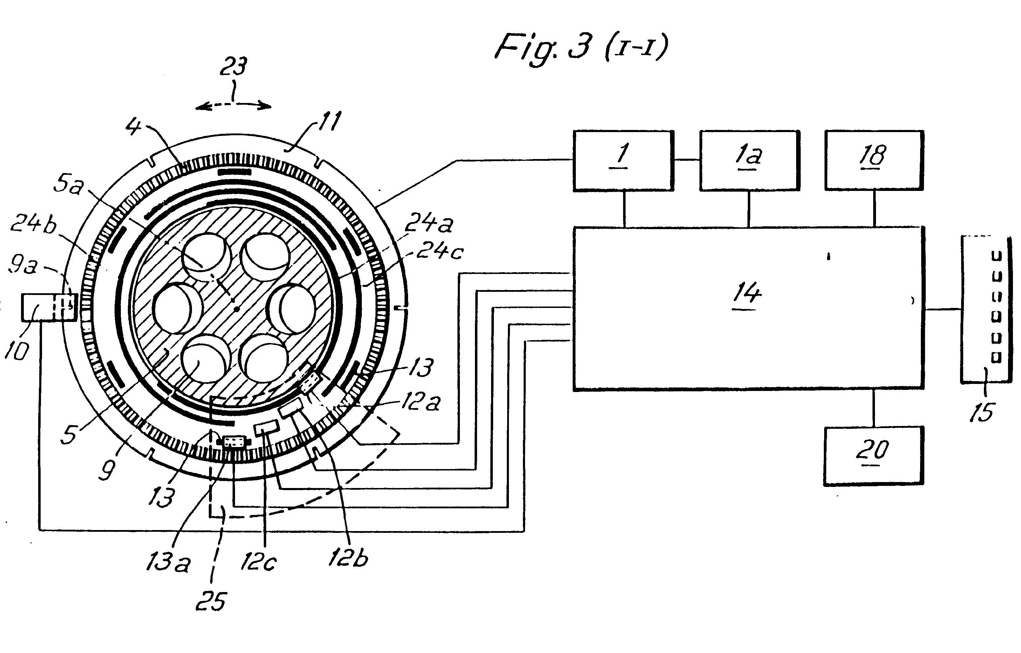

Die Figur 1 zeigt ein Mikroskop in Seitenansicht. Im Gehäuseteil ist ein Elektromotor 1, der mit einem Tacho-Generator 1a gekoppelt ist, angeordnet. Auf der Achse 17 des Elektromotors 1 ist ein Zahnrad befestigt, das mit einem weiteren Zahnrad zusammenwirkt, welches auf einer Verbindungsachse 3 unter Zwischenschaltung einer aus Sicherheitsgründen vorgesehenen Rutschkupplung 6 angeordnet ist. Dieses Getriebe 2 treibt über die Verbindungsachse 3, die mit einem Revolvergetriebe 4 verbunden ist, den Revolver 5 an, welcher im dargestellten Fall mit sechs Objektiven bestückt ist, von denen in Figur 1 vier Objektive mit unterschiedlichen Vergrößerungsstufen gezeigt sind. Lediglich das in Wirkstellung befindliche Objektiv 9b ist in den Figuren mit einer Kennziffer belegt. Die Wirkstellungs-Position bzw. die "Soll-Position" des Objektivs 9b ist dann erreicht,

2

wenn die Objektivachse mit der optischen Achse 9c des Mikroskops zusammenfällt. Die Objektive sind in bekannter Weise in den Revolveraugen 9 auswechselbar gehalten, vgl. Figur 3. Wie bei der Kennzeichnung aller am Revolver 5 vorhandenen Objektive, so ist auch bei der Kennzeichnung der sechs Revolveraugen aus Vereinfachungsgründen lediglich ein Auge mit der Bezugsziffer 9 versehen.

Der an dem Mikroskoparm 22 um die Revolverachse 5a drehbar angeordnete Revolver 5 weist eine Codierscheibe 11 auf. In Figur 3, die eine Draufsicht auf einen Schnitt längs der Linie I-I von Figur 2 darstellt,erkennt man die Codierscheibe 11, die in ihrem Peripherbereich sechs Einkerbungsmarkierungen aufweist. Von diesen Markierungen ist wiederum lediglich eine Marke 9a mit einer Bezugsziffer versehen. Diese Marke 9a kennzeichnet die Soll-Position des Revolverauges 9 bzw. des Objektivs 9b. Entsprechende Korrelations-Beziehungen gelten bezüglich der jeweils um 60° versetzten Marken und der zugehörigen Revolveraugen bzw. der Objektive. Mit dem Doppelpfeil 23 soll angedeutet werden, daß der Revolver 5 für beide Umdrehungsrichtungen - jeweils nach Maßgabe des kürzesten Verstellweges - drehbar ist. Auf der Codierscheibe 11, die fest mit dem Revolver 5 verbunden ist, befinden sich sodann ein innerer Codierstreifen 24a, ein mittlerer Codierstreifen 24b und ein äusserer Codierstreifen 24c, die sämtlich konzentrisch - jedoch mit jeweils anderem Radialabstand - zum Durchstoßpunkt der Revolverachse 5a angeordnet sind. Dabei kann es sich um kreisförmige Bahnabschnitte aus hochreflektierendem Material handeln. Es sind aber auch andere - beispielsweise magnetische - Streifen-Belegungen denkbar. Die Auswahl des Codierstreifen-Materials hängt von der Art der diesen Streifen 24a - 24c zugeordneten Code-Sensoren 12a - 12c (optische Sensoren oder magnetische Sensoren) ab. Die Code-Sensoren 12a,12b,12c sind auf einer Sensorplatte 25 angeordnet, welche fest mit dem Mikroskoparm 22 verbunden ist. Die Sensorplatte 25 ist in Figur 3 als gestrichelte Kreisring-Ausschnittsfläche dargestellt. Mit Hilfe dieser Codiereinrichtung 12a - 12c, 24a - 24c kann eine Kennung bzw. eine Vorauswahl eines bestimmten in Wirkstellung zu bringenden Objektives vorgenommen werden. Dazu sind die Code-Sensoren 12a - 12c mit einer Steuerelektronik 14 verbunden, die entweder im Fuß des Mikroskopgehäuses, vgl. Figur 1, untergebracht oder aber als externes Steuergerät ausgeführt sein kann. Die Steuerelektronik 14 ist direkt oder über eine Verbindungsleitung mit einer Tastatur 15 verbunden. Es ist auch möglich, die Tastatur 15 auf bzw. am Mikroskopfuß anzuordnen, wie Figur 1 zeigt. Sie weist beispielsweise sechs Einzeltasten auf, wobei jeweils eine Taste einem der sechs Objektive zugeordnet ist. Die Steuerelektronik 14 ist weiterhin mit einem Netzteil 18 verbunden, das die Stromversorgung sicherstellt. Außerdem kann sie mit einem Fernsteueranschluß 20 verbunden sein. Des weiteren besteht eine Verbindung zum Elektromotor 1 sowie zum Tacho-Generator 1a. Schließlich ist der Stopp-Sensor 10 direkt mit der Steuerelektronik 14 verbunden. Der Stopp-Sensor 10, der als Lichtschranke ausgebildet sein kann, ist am Mikroskoparm 22 ortsfest gehalten, wie aus Figur 2 hervorgeht.

Auf der Codierscheibe befinden sich weiterhin sechs Markierungsmittel 13, die zentrosymmetrisch zum Durchstoßpunkt 5a und unter jeweils identischen Zwischenabständen angeordnet sind. Auch hier wurde wiederum lediglich ein Markterungsmittel 13 mit einer Bezugsziffer versehen; es handelt sich um dasjenige Markierungsmittel, welches mit einem weiteren Sensor 13a in der in Figur 3 dargestellten Position zusammenwirkt. Der Sensor 13a ist ebenfalls auf der Sensorplatte 25 befestigt, vgl. auch Figur 2. Dieser sogenannte "Langsam"-Sensor 13a sowie die zugehörigen sechs "Langsam"-Markierungsmittel 13 stellen im funktionalen Zusammenwirken mit der Steuerelektronik 14 und dem Stopp-Sensor 10 bzw. den sechs Marken 9a den eigentlichen Erfindungsgegenstand dar.

Der Funktionsablauf ist nun folgender: Die von der Tastatur 15 oder dem Fernsteueranschluß 20 vorgebene Soll-Position des Revolvers 5 wird mit Hilfe der Code-Sensoren 12a - 12c ("Ist-Position") und der Steuerelektronik 14 verglichen und sodann an den Elektromotor 1 ein Spannungs-Signal ausgegeben, dessen Polarität mit der Drehrichtung 23 übereinstimmt, in die der Revolver 5 bzw. dessen Revolverauge 9 laufen muß, um auf kürzestem Wege - also schnellstmöglich - zu seinem vorgewählten Soll-Ziel zu gelangen.

Befindet sich der Revolver 5 in der Nähe etner solchen Position, so tritt die langsam-Markierung 13 mit dem Langsam-Sensor 13a in Funktion und vermindert die Geschwindigkeit des Elektromotors 1, der durch den angekoppelten Tacho-Generator 1a geregelt wird. Damit wird eine Abbremsung unmittelbar vor dem eigentlichen mechanischen Einrast-Vorgang herbeigeführt. Die Rastkugel 7a läuft nun mit verminderter Geschwindigkeit in den sogenannten "Einfangbereich" 19 der mechanischen Rastung ein. Dieser Einfangbereich 19 ist in Figur 2a näher dargestellt. Diese Figur zeigt in stark vergrößerter Darstellung die talförmige Rastkerbe 8, die von zwei Wällen umgeben sind, welche in der Figur 2a als Kuppen 21a und 21b dargestellt sind. Der Einfangbereich 19 ist derjenige Bereich, der sich zwischen den beiden talseitigen (also: den zur Rastkerbe 8 gerichteten) Hängen ergibt. Befindet sich die Rastkugel 7a in diesem Einfangbereich 19, so wird der Elektromotor 1 mittels einer Entkoppelungs-Vorrichtung 16,17a vom Objektivrevolver entkoppelt, so daß das letzte Stück des Weges bis zur eigentlichen Soll-Position - also von der Kuppe 21a bis zur Tal-Region (Rastkerbe 8) - lediglich in mechanischer Weise durch Druck der Rastfeder 7 bzw. der Rastkugel 7a auf die talseitige Flanke der Kuppe 21a ausgeführt wird. In dieser Rastposition befindet sich die Marke 9a auf der Codierscheibe 11 in Wirkstellung zum Stopp-Sensor 10, der sodann über die Steuerelektronik 14 den Elektromotor 1 ganz abschaltet. Somit wird die Genauigkeit der Rastung rein mechanisch bestimmt. Damit sind die Nachteile ausgeschaltet, die bislang bei motorischem Positionieren eines Revolvers dadurch gegeben waren, daß der Motor permanent kraftschlüssig mit dem Revolver verbunden war. Da jeder Sensor - so auch der Stopp-Sensor 10 - bezüglich der Marke 9a einen gewissen Funktionsbereich (auch: "Einfangbereich") aufweist, wäre eine Steuerung, bei der ausschließlich opto-elektrische Bauelemente Verwendung finden, nicht exakt genug. Daher wird erfindungsgemäß vorgeschlagen, die Dreheinrichtung in der Weise auszubilden bzw. das Positionierungs-Verfahren derart ablaufen zu lassen, daß die kritische letzte Wegstrecke bei aufgehobener kraftschlüssiger Verbindung zwischen dem Elektromotor 1 und dem Revolver 5 auf rein mechanische Weise erfolgt. Durch den Mitnehmerstift 17a und die Mitnehmernute 16 - vgl. Fig. 1a - wird für den kleinen Rotations-Weg $\phi$ der Elektromotor 1 von dem Objektivrevolver 5 entkoppelt. Damit ist eine positionsgenaue Wirkstellung zu erzielen, die frei von willkürlichen Fehl-Plazierungen ist.

Mit der erfindungsgemäßen Vorrichtung ist es darüber hinaus möglich, gewollte oder ungewollte manuelle Verstellungen des Objektivrevolvers automatisch zu korrigieren. Dazu wird von der Steuerelektronik 14 periodisch ein Istwert/Sollwert-Vergleich erstellt. Es erfolgt sofort eine Korrektur, wenn die Rastkugel 7a den Einfangbereich des Stopp-Sensors 10 verlassen hat. Damit ist es möglich, einen manuellen Eingriff - also ein Verdrehen des Objektivrevolvers - automatisch rückgängig zu machen. Die Energie für die Steuerelektronik 14 und den Elektromotor 1 bzw. den Tacho-Generator 1a wird von dem Netzteil 18 bereitgestellt.

Die beschriebene Einrichtung gestattet es, stark bestückte Dreheinrichtungen für optische Geräte mit hoher Präzision und großer Geschwindigkeit in vorwählbarer Weise zu positionieren. Darüber hinaus können in einfacher Weise vorhandene Fehlbedienungen erkannt und automatisch rückgängig gemacht werden. Auch ist es möglich, beispielsweise eine Revolver-Dreheinrichtung für Mikroskopobjektive mit einer analogen Revolver-Dreheinrichtung für Mikroskopkondensoren oder für optische Filter oder Blenden usw. zu kombinieren. Dabei ist es möglich, daß anstelle der in den Fig. 1 und 2 gezeigten klassischen Revolverform für Objektive auch scheibenförmige Dreheinrichtungen ("Dreh-Teller") - beispielsweise für Filter oder Blenden - Verwendung finden können. Schließlich kann die Einrichtung derart gestaltet sein, daß anstelle einer Dreheinrichtung ein linearer Schieber als Träger einer Vielzahl von optischen Bauelementen - beispielsweise von Teilerspiegeln oder Umlenkprismen - vorgesehen ist, wobei dann die beschriebenen Codierungen in Längsrichtung des Schiebers in Analoger Weise Angeordnet sein können.

Bezugzeichen-Liste

| | |
|---|---|
| 1 | - Elektromotor- |
| 1a | - Tacho-Generator |
| 2 | - Getriebe |
| 3 | - Verbindungsachse |
| 4 | - Revolvergetriebe |
| 5 | - Revolver |
| 5a | - Revolverachse |
| 6 | - Rutschkupplung |
| 7 | - Rastfeder |
| 7a | - Rastkugel |
| 8 | - Rastkerbe |
| 9 | - Revolverauge |
| 9a | - Marke |
| 9b | - Objektiv |
| 9c | - optische Achse des Mikroskops |
| 10 | - Stopp-Sensor |
| 11 | - Codierscheibe |
| 12a, 12b, 12c | - Code-Sensoren an (5) |
| 13 | - ("Langsam"-)Markierungsmittel |
| 13a | - "Langsam"-Sensor |
| 14 | - Steuerelektronik |
| 15 | - Tastatur |
| 16 | - Mitnehmernute |
| 17 | - Achse von (1) |
| 17a | - Mitnehmerstift |
| 18 | - Netzteil |

4

| 19 | - Einfangbereich (der mechanischen Rastung) |
| 20 | - Fernsteueranschluß |
| 21a, 21b | - Kuppen auf (5) |
| 22 | - Mikroskoparm |
| 23 | - Doppelpfeil (Revolver-Drehrichtungen) |
| 24a, 24b, 24c | - Codierstreifen |
| 25 | - Sensor-Platte |

**Patentansprüche**

1. Revolver-Dreheinrichtung für Mikroskope, mit auf einem Revolver (5) mit einer Anzahl Revolveraugen (9) angebrachten optischen Bauelementen (9b), die jeweils einzeln in Wirkstellung bringbar sind, enthaltend
   (a) eine motorische Antriebseinrichtug (1-4) zum Antrieb des Revolvers (5),
   (b) eine Codiereinrichtung (11,12a-12c;24a-24c) mit einer auf dem Revolver (5) angebrachten und Codierungen (12a-12c; 24a-24c) tragenden Codierscheibe (11) zur Bestimmung der jeweiligen Ist-Position des Revolvers (5),
   (c) Mittel (15,20) zur Vorauswahl eines bestimmten in eine vorgegebene Soll-Position zu bringenden Revolverauges (9),
   (d) Mittel (14) zum Steuern der Drehzahl der motorischen Antriebseinrichtung (1-4) in Abhängigkeit von der jeweiligen Ist-Position des Revolvers (5) und der vorgegebenen Soll-Position des ausgewählten Revolverauges (9), sowie
   (e) Rastmittel (7,7a;8) zum Fixieren des ausgewählten Revolverauges (9) in seiner Soll-Position, **dadurch gekennzeichnet,**
   daß auf der Codierscheibe (11) zusätzlich zu den Codierungen (12a-12c;24a-24c) Markierungen (13) angeordnet sind, deren jede jeweils einem Revolverauge (9) zugeordnet ist, und daß die Mittel (14) zum Steuern der Drehzahl einen Sensor (13a) umfassen, der die dem ausgewählten Revolverauge (9) entsprechende Markierung (13) detektiert und im Zusammenwirken mit der jeweiligen Markierung eine geregelte kontinuierliche Reduzierung der Drehzahl der motorischen Antriebseinrichtung (1-4) vor Erreichen der dem ausgewählten Revolverauge (9) entsprechenden Soll-Position auslöst.

2. Revolver-Dreheinrichtung nach Anspruch 1, **dadurch gekennzeichnet,** daß die Markierungen (13) auf der Codierscheibe (11) - vorzugsweise entlang einer zur Revolverachse (5a) konzentrischen Kreislinie - angeordnet sind.

3. Revolver-Dreheinrichtung nach Anspruch 1 oder 2, **dadurch gekennzeichnet,** daß die Markierungen (13) auf der Außenfläche des Revolvers (5) angeordnet sind.

4. Revolver-Dreheinrichtung nach einem der Ansprüche 1 bis 3, **dadurch gekennzeichnet,** daß die motorische Antriebseinrichtung einen Elektromotor (1) mit angekoppeltem Tacho-Generator (1a) umfaßt, welche - vorzugsweise über ein erstes Getriebe (2), eine Verbindungsachse (3) sowie ein weiteres Getriebe (4) - mit dem Revolver (5) kraftschlüssig verbunden ist.

5. Revolver-Dreheinrichtung nach Anspruch 4, **dadurch gekennzeichnet,** daß die motorische Antriebseinrichtung eine Rutschkupplung (6) und der Elektromotor (1) eine Entkoppelungsvorrichtung aufweist, die eine Mitnehmernute (16) und einen Mitnehmerstift (17a) umfaßt.

6. Revolver-Dreheinrichtung nach mindestens einem der vorhergehenden Ansprüche, **dadurch gekennzeichnet,** daß die jeder optischen Baueinheit zugeordnete Rastkerbe (8) durch zwei im Querschnitt als Kuppen (21a, 21b) darstellbare Wälle ausgebildet ist (Fig. 2a).

7. Verfahren zur Regelung der Drehzahl einer Revolver-Dreheinrichtung für Mikroskope, mit auf einem Revolver (5) mit einer Anzahl Revolveraugen (9) angebrachten optischen Bauelementen (9b), die jeweils einzeln in Wirkstellung bringbar sind, das folgende Schritte umfaßt:
   (a) Bestimmen der jeweiligen ist-Position des Revolvers (5),
   (b) Vorauswahl einer bestimmten Soll-Position des Revolvers (5),
   (c) Steuern der Drehzahl des Revolvers (5) in Abhängigkeit von dessen jeweiliger Ist-Position und der vorgewählten Soll-Position des Revolvers (5),
   (d) Fixieren des Revolvers mit dem ausgewählten Revolverauge in der Soll-Position mit Hilfe von Rastmitteln (7,7a;8), **dadurch gekennzeichnet**, daß
(e) vor Erreichen der ausgewählten Soll-Position eine geregelte kontinuierliche Drehzahlverminderung der Drehzahl des Revolvers (5) ausgelöst wird.

8. Verfahren nach Anspruch 7, **dadurch gekennzeichnet**, daß eine Rastkugel (7a) infolge der durch Markierungen (13) und einen Sensor (13a) augelösten Abbremsung des Revolvers (5) bei verminderter Revolver-Drehzahl in einen Einfangbereich (19) einläuft, daß ein Stopp-Sensor (10) sodann im Zusammenwirken mit einer Marke (9a) die Drehzahl auf Null reduziert und zur Sicherstellung einer rein mechanischen Einrastung zusätzlich eine Entkopplung einer motorischen Antriebseinrichtung (1-4) vom Revolver (5) erfolgt.

9. Verfahren nach Anspruch 8, **dadurch gekennzeichnet**, daß für eine automatische Rückführung des Revolvers (5) in seine vorgegebene Soll-Position bei dessen - beabsichtiger oder unbeabsichtigter - manuellen Verstellung aus derselben von einer Steurelektronik (14) in periodischen Abständen ein Istwert/Sollwert-Vergleich der Revolver-Position erstellt und ein entsprechendes Signal an die Antriebseinrichtung (1-4) gegeben wird.

## Claims

1. Rotary turret equipment for microscopes, with optical components (9b) which are mounted on a turret (5) by a number of turret sockets (9) and which are each bringable individually into effective setting, the equipment containing
   (a) a motorised drive equipment (1 to 4) for the drive of the turret (5),
   (b) a coding equipment (11, 12a to 12c; 24a to 24c) with a coding disc (11), which is mounted on the turret (5) and carries codings (12a to 12c; 24a to 24c), for the determination of the respective actual position of the turret (5),
   (c) means (15; 20) for the preselection of a certain turret socket (9) to be brought into a preset target position,
   (d) means (14) for the control of the rotational speed of the motorised drive equipment (1 to 4) in dependence on the respective actual position of the turret (5) and the preset target position of the selected turret socket (9), as well as
   (e) detent means (7, 7a; 8) for the fixing of the selected turret socket (9) in its target position, characterised thereby
   that markings (13) are arranged, additionally to the codings (12a to 12c; 24a to 24c), on the coding disc (11), each of which markings is respectively associated with a turret socket (9), and that the means (14) for the control of the rotational speed comprise a sensor (13a), which detects the marking (13) corresponding to the selected turret socket (9) and which, in cooperation with the respective marking, initiates a regulated continuous reduction in the rotational speed of the motorised drive equipment (1 to 4) before reaching the target position corresponding to the selected turret socket (9).

2. Rotary turret equipment according to claim 1, characterised thereby, that the markings (13) are arranged on the coding disc (11), preferably along a circular line concentric with the turret axis (5a).

3. Rotary turret equipment according to claim 1 or 2, characterised thereby, that the markings (13) are arranged on the external surface of the turret (5).

4. Rotary turret equipment according to one of the claims 1 to 3, characterised thereby, that the motorised drive equipment comprises an electrical motor (1) with a tachogenerator (1a) coupled thereto and is force-lockingly connected with the turret (5), preferably by way of a first gear (2), a connecting axle (3) as well as a further gear (4).

5. Rotary turret equipment according to claim 4, characterised thereby, that the motorised drive equipment comprises a slipping clutch (6) and the electrical motor (1) displays a disengaging device which comprises an entraining groove (16) and an entraining pin (17a).

6. Rotary turret equipment according to at least one of the precding claims, characterised thereby, that the detent notch (8) associated with each optical subassembly is formed by two walls which are representable in cross-section (Figure 2a) as domes (21a, 21b).

**7.** Method for the regulation of the rotational speed of a rotary turret equipment for microscopes, with optical components (9b) which are mounted on a turret (5) by a number of turret sockets (9) and which are each bringable individually into effective setting, the method comprising the following steps

(a) determining the respective actual position of the turret (5),

(b) preselection of a certain target position of the turret (5),

(c) controlling of the rotational speed of the turret (5) in dependence on the respective actual position thereof and the preselected target position of the turret (5),

(d) fixing of the turret with the selected turret socket in the target position with the aid of detent means (7, 7a; 8), characterised thereby, that

(e) before reaching the selected target position a regulated continuous rotational speed reduction in the rotational speed of the turret (5) is initiated.

**8.** Method according to claim 7, characterised thereby, that a detent ball (7a) runs into a catching range (19) at reduced rotational speed of the turret in consequence of the braking of the turret (5) initiated by markings (13) and a sensor (13a), that a stop-sensor (10) then in co-operation with a mark (9a) reduces the rotational speed to zero and a disengagement of a motorised drive equipment (1 to 4) from the turret (5) takes place in addition to make certain of a purely mechanical detent.

**9.** Method according to claim 8, characterised thereby, that a comparison between actual value and target value of the turret position is set up at periodic intervals by an electronic control system (14) and a corresponding signal is given to the drive equipment (1 to 4) for an automatic return of the turret (5) into its preset target position in the case of its intentional or unintentional manual displacement from the same.

## Revendications

1.- Tour révolver pour microscope avec composants optiques (9b) agencés sur un revolver (5) ayant un certain nombre d'yeux de revolver (9), lesquels peuvent être portés individuellement en position active, contenant

(a) un système d'entraînement à moteur (1-4) pour l'entraînement du revolver (5),

(b) un système de codage (11, 12a-12c ; 24a-24c) avec un disque de codage (11) prévu sur le revolver (5) et portant des codages (12a-12c ; 24a-24c) pour la détermination de toute position réelle du revolver (5),

(c) des moyens (15, 20) pour le choix préalable d'un oeil de revolver déterminé (9) à porter à une position théorique prédéterminée,

(d) des moyens (14) pour régler le nombre de tours du système d'entraînement à moteur (1-4) selon la position réelle du revolver (5) et la position théorique prédéterminée de l'oeil choisi de revolver (9) ainsi que

(e) des moyens (7, 7a ; 8) pour la fixation de l'oeil choisi de revolver (9) à sa position théorique, caractérisé en ce que

sur le disque de codage (11) sont agencés, en plus des codages (12a-12c ; 24a-24c), des marquages (13) à chacun desquels est affecté un oeil de revolver (9) et en ce que les moyens (14) pour régler le nombre de tours comprennent un capteur (13a) qui détecte le marquage (13) correspondant à l'oeil de revolver choisi (9) et qui déclenche, en coopération avec chaque marquage, une réduction continue et réglée du nombre de tours du système d'entraînement à moteur (1-4) avant d'atteindre le position théorique correspondant à l'oeil de revolver (9) choisi.

2.- Tour revolver selon la revendication 1, caractérisé en ce que les marquages (13) sur le disque de codage (11) sont agencés avantageusement le long d'une ligne circulaire concentrique à l'axe (5a) du revolver.

3.- Tour révolver selon la revendication 1 ou 2, caractérisé en ce que les marquages (13) sont agencés sur la surface externe du revolver (5).

4.- Tour revolver selon l'une quelconque des revendications 1 à 3, caractérisé en ce que le système d'entraînement à moteur comporte un moteur électrique (1) avec génératrice tachymétrique (1a) qui lui est couplée, qui est avantageusement lié par un premier entraînement (2), un axe de liaison ainsi qu'un autre entraînement (4), au revolver (5) en liaison de force.

5.- Tour revolver selon la revendication 4, caractérisé en ce que le système d'entraînement à moteur présente un accouplement à friction (6) et en ce que le moteur électrique (4) présente un dispositif de découplage, qui comprend une rainure d'entraînement (16) et une broche d'entraînement (17a).

6.- Tour revolver selon au moins l'une des revendications précédentes, caractérisé en ce que l'entaille d'arrêt (8) affectée à chaque composant optique est formée par des parois qui peuvent être représentées, en section, sous la forme de mamelons (21a, 21b) (figure 2a.

7.- Procédé pour la régulation de la vitesse de rotation d'un tour revolver pour microscope avec des composants optiques (9b) agencés sur un revolver (5) ayant un certain nombre d'yeux de revolver (9), lesquels composants peuvent être individuellement mis en position active, comprenant les étapes suivantes :

(a) détermination de la position réelle du revolver (5),

(b) choix préalable d'une position théorique déterminée du révolver (5),

(c) réglage du nombre de tours du revolver (5) selon la position réelle et la position théorique choisies du revolver (5),

(d) fixation du revolver avec l'oeil choisi de revolver à la position théorique à l'aide de moyens d'arrêt (7, 7a ; 8),

caractérisé en ce que

(e) avant d'atteindre la position théorique choisie, est déclenchée une diminution continue et réglée du nombre de tours du revolver (5).

8.- Procédé selon la revendication 7, caractérisé en ce qu'une bille d'arrêt (7a), par suite du freinage du revolver (5) déclenché par les marquages (13) et un capteur (13a), pour un nombre de tours diminué du revolver, pénètre dans une zone de captage (19) et en ce qu'ensuite un capteur d'arrêt (10), en coopération avec une marque (9a), réduit le nombre de tours à zéro et pour s'assurer d'un arrêt mécanique pur, provoque de plus un découplage d'un système d'entraînement à moteur (1-4) du revolver (5).

9.- Procédé selon la revendication 8, caractérisé en ce que, pour un retour automatique du revolver (5) à sa position théorique prédéterminée lors de son déplacement manuel volontaire ou involontaire au loin de celle-ci, une comparaison de la valeur réelle/valeur de consigne de la position du revolver est produite périodiquement par une électronique de commande (14), et un signal correspondant est appliqué au système d'entraînement (1-4).

Fig.1

Fig. 2

Fig. 2a

Fig. 1a

Fig. 1b

Fig. 3 (I-I)

EP 0 307 421 B1